Europäisches Patentamt

European Patent Office

Office européen des brevets

(11) Veröffentlichungsnummer: **0 100 112**
A1

# (12) EUROPÄISCHE PATENTANMELDUNG

(21) Anmeldenummer: 83200978.1

(22) Anmeldetag: 01.07.83

(51) Int. Cl.³: **G 02 F 1/133**, G 02 F 1/137

(30) Priorität: **13.07.82 CH 4256/82**

(43) Veröffentlichungstag der Anmeldung: **08.02.84**
**Patentblatt 84/6**

(84) Benannte Vertragsstaaten: **CH DE FR GB LI**

(71) Anmelder: **BBC Aktiengesellschaft Brown, Boveri & Cie., Haselstrasse, CH-5401 Baden (CH)**

(72) Erfinder: **Schad, Hanspeter, Dr. Dipl.-Phys., Boldistrasse 6, CH-5415 Rieden (CH)**

(54) **Flüssigkristallanzeige.**

(57) Eine Flüssigkristallanzeige besteht aus zwei Zellen (1, 2) mit Substanzen (6, 10) unterschiedlichen nematischen Bereichs, und wird in einem Temperaturbereich von 100°C bis −30°C betrieben. Die Substanzen (6, 10) sind in ihrem nematischen Bereich verdrillt, und im gesamten Betriebstemperaturbereich flüssig. Die Zellen sind so angesteuert, dass stets nur eine Anzeige sichtbar ist. Dazu wird die Ansteuerung mindestens in zwei verschiedene Temperaturbereiche unterteilt. Die Anzeige ist deshalb im gesamten Betriebstemperaturbereich gut multiplexierbar und weist einen steten und ausgezeichneten Kontrast auf.

EP 0 100 112 A1

Flüssigkristallanzeige

Die vorliegende Erfindung bezieht sich auf eine Flüssigkristallanzeige nach dem Oberbegriff des Anspruchs 1.

Eine solche Anzeige ist bekannt aus der US-A-3 873 186. Die dort beschriebene Flüssigkristallanzeige besteht aus zwei Zellen, die von drei Trägerplatten gebildet werden, und nach dem Prinzip der dynamischen Streuung betrieben werden. In der ersten Zelle ist der Flüssigkristall HBMCA mit einem nematischen Bereich von $62^{o}C$ bis $102^{o}C$ eingefüllt. In der zweiten Zelle ist eine Mischung der Flüssigkristalle MBBA und HBPA mit einem nematischen Bereich von $-37^{o}C$ bis $62^{o}C$ eingefüllt. Der nematische Bereich ist dabei definiert als der Bereich zwischen dem Schmelzpunkt und dem Klärpunkt des Flüssigkristalls. Wenn die erste Zelle in ihrem nematischen Bereich angesteuert ist, besteht die Substanz der zweiten Zelle aus einer isotropen Flüssigkeit. Umgekehrt, wenn die zweite Zelle in ihrem nematischen Bereich angesteuert ist, befindet sich die Substanz der ersten Zelle in einem isotropen festen Zustand. Die durchsichtigen Elektrodenschichten der beiden Zellen sind dabei an einer Spannungsquelle angeschlossen. Die Anzeige könnte auch reflektiv betrieben werden, wenn die letzte Elektrodenschicht aus einem spiegelnden, leitenden Material, wie z.B. Aluminium, gebildet wird.

Da eine Flüssigkristallsubstanz in festem Zustand doppelbrechende Eigenschaften aufweist, hat die bekannte Anzeige den wesentlichen Nachteil, dass unterhalb 62°C aufgrund der optischen Serienschaltung beider Zellen störende Parallaxen, eine sichtbare Kontrastverringerung und unerwünschte Farberscheinungen auftreten. Ein zusätzlicher Nachteil dieser Anzeige, die nach dem Prinzip der dynamischen Streuung arbeitet, ist, dass sie für den Multiplexbetrieb ungeeignet ist.

Es ist nun die Aufgabe der Erfindung, eine Anzeige der vorerwähnten Art derart zu verbessern, dass sie bei jeder Betriebstemperatur der Anzeige einen gleich guten Kontrast, keine störende Parallaxen und gute Multiplexeigenschaften aufweist.

Diese Aufgabe wird durch die Merkmale des Anspruchs 1 gelöst.

Die Erfindung beruht im wesentlichen auf der neuen Erkenntnis, dass es zwar Flüssigkristallsubstanzen gibt, die für einen erweiterten Temperaturbereich, z.B. von 100°C bis -30°C, geeignet sind, diese aber im unteren Teil des Temperaturbereiches, etwa von 0°C bis -30°C, für den Multiplexbetrieb ungeeignet sind, da die Schaltzeiten einer Drehzelle mit solchen Flüssigkristallsubstanzen zu lang werden. Nach der Erfindung werden nun zwei Drehzellen optisch in Serie geschaltet, wobei die erste Zelle eine Substanz enthält, die einen annähernd dem erweiterten Temperaturbereich entsprechenden nematischen Bereich besitzt, und die zweite Zelle eine Substanz enthält mit einem nematischen Bereich, der den obengenannten unteren Teil des erweiterten Temperaturbereiches abdeckt und in diesem Bereich kurze Schaltzeiten ermöglicht, also voll multiplexfähig ist. Auf diese Weise ergibt sich eine Anzeigeanordnung, die über den gesamten Betriebstemperaturbereich ausgezeichnete Multiplexeigenschaften aufweist, ohne dass sich die Anzeigen der beiden Zellen - im Gegensatz zur bekannten Anordnung - gegenseitig störend beeinflussen.

Die Erfindung hat unter anderem den grossen Vorteil, dass nunmehr eine Anzeige nach dem Prinzip der Drehzelle auch bei extremen Temperaturbedingungen kurze Schaltzeiten vorweist. Ein anderer, entscheidender Vorteil ist, dass die Anzeige im gesamten Temperaturbereich sehr gute Multiplexeigenschaften besitzt. Sie ist deshalb besonders geeignet für Messinstrumente im Aussenbetrieb, die häufig wechselnde Messdaten in einem breiten Temperaturbereich erfassen sollen, z.B. die Geschwindigkeit eines Autos.

Die Erfindung wird nun anhand eines in der Zeichnung dargestellten Ausführungsbeispiels näher erläutert.

Dabei zeigt:

Fig. 1    einen Schnitt durch eine erfindungsgemässe Anzeige,

Fig. 2    die zugehörige Ansteuerschaltung,

Fig. 3    die Anordnung der Front- und Rückelektrodenschichten bei einer Anzeige mit Siebensegment-Elektroden.

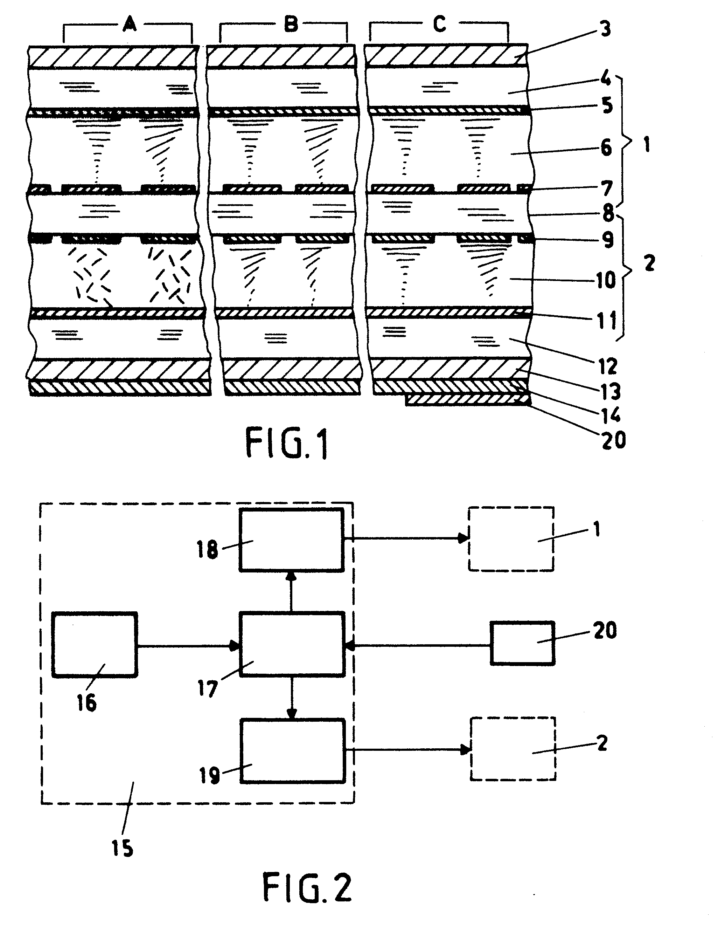

In Figur 1 ist eine Anzeige dargestellt, die aus zwei Zellen 1 und 2 besteht, die durch Trägerplatten 4, 8 und 12 gebildet werden. Die Trägerplatten 4, 8 und 12 bestehen vorzugsweise aus Glas, wobei die mittlere Trägerplatte 8 aus Stabilitätsgründen dicker gewählt werden kann als die beiden äusseren Trägerplatten 4 und 12. Auf den Innenseiten jeder Zelle sind durchsichtige Elektrodenschichten 5, 7 und 9, 11 aus $SnO_2$ angeordnet.

Die Elektrodenschichten 5, 7 und 9, 11 sind in Fig. 1 als Matrixelektroden ausgebildet, die aus gegeneinander gekreuzten, zueinander parallelen Streifen bestehen und auf diese Art eine Anzeige in Form eines Punktrasters bilden. Dabei sind die Matrixelektroden der Rückelektrodenschicht 7 und der Frontelektrodenschicht 9, welche sich auf der mittleren Trägerplatte 8 befinden, parallel zueinander angeordnet. Die Elektrodenschichten 5, 7 und 9, 11 können aber auch die übliche Siebensegment-Anordnung besitzen.

Auf den Elektrodenschichten 5, 7, 9, 11 sind die üblichen Orientierungsschichten angebracht (nicht dargestellt). Damit wird in bekannter Weise die verdrillte Struktur der Flüssigkristallsubstanz 6, 10, in deren nematischem Zustand erzeugt, so dass sich dann jeweils eine Drehzelle ergibt (vgl. z.B. Elektronik 1974, Heft 4, Seiten 121 - 124. Auf der vorderen Trägerplatte 4 befindet sich ein vorderer Polarisator 3, auf der hinteren ein hinterer Polarisator 13. Die Polarisationsebenen dieser beiden Polarisatoren 3 und 13 bilden einen Winkel von etwa 90° zueinander. Hinter dem Polarisator 13 ist ein metallischer, diffus reflektierender Reflektor 14 angeordnet, wie z.B. aus DE-A-29 01 580 bekannt ist. Auf der äusseren Oberfläche der Trägerplatte 12, hinter dem Reflektor 14, ist ein Temperaturfühler 20 angeordnet, der im wesentlichen aus einer integrierten Schaltung besteht, wie z.B. LM 3911 der Firma National Semiconductor, USA oder AD 590 der
Firma Analog Devices, USA. Als Flüssigkristallsubstanz 6
für die erste Zelle 1 sind die folgenden Substanzen besonders geeignet:

- die nematische Phase 1694 TNC der Firma Merck, BRD, mit
einem Klärpunkt von 86$^o$C und einem Schmelzpunkt von -20$^o$C,
oder

- die nematische Phase 1957 TNC der Firma Merck, BRD, mit
einem Klärpunkt von 85$^o$C und einem Schmelzpunkt von -16$^o$C,
oder

- die Substanz ROTN 605 der Firma Hoffmann-La Roche, CH mit
einem Klärpunkt von 96$^o$C und einem Schmelzpunkt von -20$^o$C.

Für die zweite Zelle 2 wurden käufliche Flüssigkristallsubstanzen so gemischt, dass eine besonders für den tieferen
Temperaturbereich (bis -30$^o$C) geeignete Flüssigkristallsubstanz 10 erhalten wurde. Sie besitzt einen Klärpunkt von
etwa 6$^o$C und einem Schmelzpunkt um -30$^o$C. Drei solche Mischungen M I, M II und M III sind aus Tabelle 1 ersichtlich. Dabei weisen die Bezeichnungen Merck und Roche auf
die Firmen Merck, BRD und Hoffmann-La Roche, CH, hin.

Tabelle 1

| Substanzanteile in Gewichtsprozenten | | | Substanz |
|------|------|------|----------|
| M I | M II | M III | |
| 0.33 | 0.37 | 0.41 | S 1482 (Merck) |
| 0.12 | 0.13 | 0.15 | S 1476 (Merck) |
| 0.07 | 0.08 | 0.11 | S 1477 (Merck) |
| 0.06 | ---- | ---- | RO-CE-1942 (Roche) |
| 0.07 | ---- | ---- | S 1497 (Merck) |
| 0.08 | 0.10 | 0.12 | RO-CB-5121 (Roche) |
| 0.15 | 0.17 | ---- | S 1114 (Merck) |
| 0.08 | 0.10 | 0.12 | S 1115 (Merck) |
| 0.04 | 0.05 | 0.06 | RO-CP-7037 (Roche) |
| ---- | ---- | 0.03 | S 1544 (Merck) |
| 1.00 | 1.00 | 1.00 | |

Die Mischung M I besitzt einen Klärpunkt von 8$^{\circ}$C und einen Schmelzpunkt von -30$^{\circ}$C. Die Mischung M II besitzt einen Klärpunkt von 4$^{\circ}$C und einen Schmelzpunkt von -28$^{\circ}$C. Die Mischung M III besitzt einen Klärpunkt von 8$^{\circ}$C. Der Schmelzpunkt dieser Mischung liegt weit unter -30$^{\circ}$C. Die Schalteigenschaften aller dieser Mischungen übertreffen diejenigen der eigens für Tieftemperaturanwendungen entwickelte Substanzen, z.B. der Substanz ZLI 1957 der Fa. Merck, um das Vier- bis Fünffache.

In Figur 2 ist das prinzipielle Blockschaltbild der Ansteuerschaltung 15 mit dem Temperaturfühler 20 dargestellt. Die Schaltung besteht aus einem Daten-Eingabegerät 16, einer Recheneinheit 17 und zwei Treibern 18 und 19 für die Zellen 1 und 2. Der Temperaturfühler 20 ist direkt mit der Recheneinheit 17 verbunden. Die Pfeile geben die Richtung der Datenflüsse an. Die Zellen 1 und 2 gehören funktionsmässig nicht zur Ansteuerung, weshalb sie nur gestrichelt gezeichnet sind. Das Daten-Eingabegerät 16 kann aus einer an sich bekannten Tastatur mit Zeichen-Generator bestehen, die die Steuersignale z.B. in ASCII-Code an die Recheneinheit 17 weitergibt. Es könnte aber auch aus einem Analog-Messgerät und einem A/D-Wandler bestehen. Die Recheneinheit 17 ist vorzugsweise ein Mikroprozessor mit entsprechenden Speichereinheiten. Der Mikroprozessor Z-80 der Firma Zilog, USA, eignet sich sehr gut. Als Treiber 17 und 18 für die beiden Zellen 1 und 2 sind die integrierten Schaltkreise HD 44100 der Firma Hitachi, JP, besonders zweckmässig.

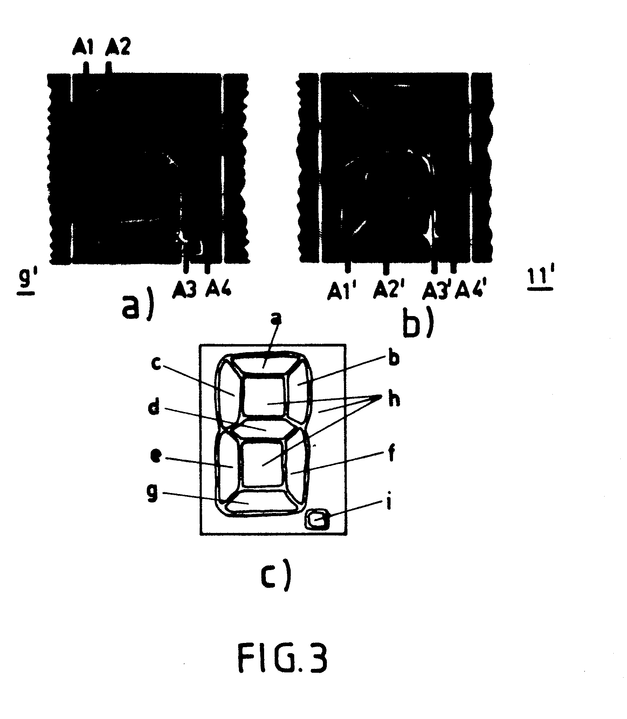

In Figur 3 ist eine besonders zweckmässige Ausgestaltung von Siebensegment-Elektroden für die Elektrodenschichten 9 und 11 der zweiten Zelle 2 dargestellt. Insbesondere zeigen Fig. 3a und 3b die Draufsicht eines Teils der Frontelektrodenschicht 9 und eines Teils der Rückelektrodenschicht 11. In Fig. 3c sind die neun möglichen Anzeigebereiche einer Zifferanzeige a bis i dargestellt. Jeweils drei Elektrodensegmente des zu einer Ziffer gehörenden Teils der Front- 9 oder der Rückelektrodenschicht 11 sind elektrisch miteinander verbunden. Dabei sind von den elektrischen Anschlüssen A1 bis A4 der Frontelektrodenschicht 9 die Anschlüsse A1 und A4 elektrisch miteinander verbunden. Von den Anschlüssen A1' bis A4' der Rückelektrodenschicht 11 sind die Anschlüsse A2' und A4' elektrisch miteinander verbunden.

Die Funktionsweise der erfindungsgemässen Anzeige geht aus folgendem hervor.

0100112
64/82

Der nematische Bereich der Flüssigkristallsubstanz 6 liegt zwischen $100^{\circ}$C und $-20^{\circ}$C. Obwohl die Flüssigkristallsubstanz 6 der Zelle 1 einen Schmelzpunkt von etwa $-20^{\circ}$C besitzt, ist sie trotzdem in dem gesamten Betriebstemperaturbereich von etwa $100^{\circ}$C bis etwa $-30^{\circ}$C flüssig. Dies rührt von der Tatsache her, dass ganz allgemein Flüssigkristalle weitgehend unterkühlbar sind. Das bedeutet, dass ein Flüssigkristall bei Erniedrigen der Temperatur unterhalb des nominellen Schmelzpunktes noch immer flüssig bleibt. Jedoch sind Substanzen mit einem so grossen nematischen Bereich bei tieferen Temperaturen, von $0^{\circ}$C abwärts, für den Multiplexbetrieb nicht mehr geeignet, da ihre Reaktionszeiten dann zu lang werden. Die Flüssigkristallsubstanz 10 in der zweiten Zelle 2 weist einen nematischen Bereich von $5^{\circ}$C bis unterhalb $-30^{\circ}$C auf. Sie hat im Temperaturbereich unterhalb $0^{\circ}$C sehr gute Schalteigenschaften.

Die Betriebszustände der Anzeige in den verschiedenen Temperaturbereichen sind schematisch in den Abschnitten A, B und C angedeutet. Dabei ist bei der die Anzeige tragenden Zelle jeweils links der Zustand mit angeschaltetem Feld ($V_{ein}$), rechts der Zustand mit ausgeschaltetem Feld ($V_{aus}$) gezeichnet.

Je nach Betriebstemperatur wird nun die Zelle 1 oder die Zelle 2 im Multiplexverfahren angesteuert. Dazu ist der gesamte Betriebstemperaturbereich in zwei Bereiche unterteilt, die sich oberhalb und unterhalb $0^{\circ}$C befinden. Mittels des Temperaturfühlers 20 wird die momentane Temperatur der Flüssigkristallanzeige in der Recheneinheit 17 mit gespeicherten Temperaturwerten verglichen. Aufgrund dessen wird von der Recheneinheit 17 entschieden, welche Zelle anzusteuern ist. Die über das Dateneingabegerät 16 eingegebenen Daten werden dann dem entsprechenden Treiber 17 oder 18 zugeführt. Dabei wird die eine Zelle derart angesteuert, dass eine Anzeige erfolgt, die andere Zelle liegt
jedoch nicht an der Betriebsspannung. Insbesondere wird
die erste Zelle 1 in dem ersten Temperaturbereich von
etwa $100^{o}C$ bis $0^{o}C$ mit den eingegebenen Daten angesteuert.

Der Klärpunkt der Flüssigkristallsubstanz 10 der zweiten
Zelle 2 liegt zwischen etwa $10^{o}C$ und $0^{o}C$. Oberhalb des
Klärpunktes ist die Substanz 10 isotrop flüssig, und beeinflusst deshalb die Anzeige der Zelle 1 nicht (Figur 1,
Abschnitt A).

In dem zweiten Temperaturbereich, also unterhalb $0^{o}C$, liegt
die Zelle 2 an der Betriebsspannung, übernimmt also die Anzeige. Die erste Zelle 1 wird nicht angesteuert. Unterhalb
des Klärpunktes und bei fehlender Ansteuerung besitzt die
Substanz 10 eine verdrillt nematische Struktur. Die Polarisationsebene des transmittierten Lichtes wird dabei in der
zweiten Zelle 2 um $90^{o}$ gedreht. Die Flüssigkristallsubstanz 6 der ersten Zelle 1 besitzt hier - weil nicht angesteuert - eine verdrillt nematische Struktur. Dies bedeutet, dass statt einer Anzeige mit z.B. dunklen Zeichen
auf einem hellen Untergrund, eine Anzeige mit hellen
Zeichen auf einem dunklen Untergrund entsteht (Figur 1,
Abschnitt C).

Um eine solche Invertierung der Anzeige unterhalb des Klärpunktes der zweiten Flüssigkristallsubstanz 10 zu vermeiden, ist es erforderlich, dass das Anzeigemuster der
Elektrodenschichten 9 und 11 der zweiten Zelle 2 derart
ausgebildet ist und die Elektroden so angesteuert werden,
dass - die Anzeige der Zelle 2 für sich betrachtet - eine
gegenüber der Anzeige der ersten Zelle invertierte Darstellung auftritt. Unter dem Einfluss der nicht angesteuerten Zelle 1 ergibt dies auch in dem unteren Temperaturbereich eine (hier) positive, also nicht-invertierte Anzeige. In Fig. 3a und 3b ist die Ausbildung dieser Elektrodenschichten für eine Siebensegment-Anzeige verdeutlicht. Im Prinzip sind die Teile der Elektrodenschichten 9 und 11, die zu einer Ziffer-Anzeige gehören, je in drei Segmente unterteilt. Die einzelnen Anzeigebereiche sind dann die Schnittpunkte der 3 x 3-Matrix für das Multiplex-Ansteuerverfahren. Auf diese Art wird es möglich, die einzelnen Anzeigebereiche a bis i (Fig. 3c) einer Ziffer-Anzeige mit Dezimalpunkt anzuzeigen. Z.B. wird der Untergrund einer Ziffer mit Dezimalpunkt, der Anzeigebereich h, angezeigt, wenn zwischen den Anschlüssen A1 - A4 der Frontelektrode 9' und den Anschlüssen A2' - A4' der Rückelektrode 11' die Betriebsspannung angelegt wird. Für die verlangte Anzeige der zweiten Zelle 2 müssen aber gerade alle anderen Bereiche, a bis f und i, zur Anzeige gebracht werden. Damit ist gewährleistet, dass z.B. die Anzeige des Anzeigebereiches h in dem gesamten Temperaturgebiet von etwa 100°C bis etwa -30°C einheitlich ist.

Die obengenannte Anordnung und Ansteuerung der Elektroden ist bei einer Anordnung mit Matrixelektroden, die aus parallelen Streifen bestehen, automatisch gegeben.

Ein bestimmtes Anzeigemuster der Zelle 1 im oberen Temperaturbereich in Verbindung mit einem hierzu invertierten Anzeigemuster der Zelle 2 im unteren Temperaturbereich ergibt eine einheitliche Anzeige im gesamten Betriebstemperaturbereich der Flüssigkristallanzeige.

Die Anzeige kann sowohl in Reflexion als auch in Transmission betrieben werden, wobei dann der Reflektor 14 entfällt. Um die Parallaxen gering zu halten - die bei Reflexionsbetrieb eher störend wirken -, ist zweckmässigerweise die erste Zelle 1 mit dem häufiger auftretenden Temperaturbereich von etwa 100$^o$C bis 0$^o$C direkt vor dem Reflektor 14 anzuordnen.

Eine weitere Steigerung der Anzeigequalität lässt sich durch Aufteilung des oberen Temperaturbereiches (100$^o$C bis 0$^o$C) in zwei Teilbereiche und eine besondere Art der Ansteuerung der Zelle 2 erzielen.

Im ersten Teilbereich, von 100$^o$C bis etwa 10$^o$C, wird die Anzeige wie oben beschrieben betrieben. Im zweiten Teilbereich, von etwa 10$^o$C bis 0$^o$C, wird eine Betriebsspannung von mindestens dem Dreifachen der Freedericksz-Schwellenspannung der zweiten Flüssigkristallsubstanz 10 an alle Elektroden 9 und 11 der zweiten Zelle 2 angelegt. Oberhalb des Klärpunkts ist die Substanz 10 noch immer isotrop flüssig; die angelegte Spannung ändert diesen Zustand nicht. Unterhalb des Klärpunkts erhält die Substanz 10 nun durch die angelegte Spannung eine nahezu homöotrope Orientierung. Die Anzeige der ersten Zelle 1 wird dabei nicht gestört.

Um auch unterhalb 0$^o$C, in dem zweiten Temperaturbereich, eine einheitliche, nicht-invertierte Anzeige zu erhalten, muss die Anzeige der zweiten Zelle 2 in der beschriebenen Weise invertiert werden.

Selbstverständlich können die Polarisatoren 3 und 13 auch parallel angeordnet sein, so dass statt eine positive Anzeige - dunkle Zeichen auf hellem Untergrund - eine negative Anzeige entsteht.

Patentansprüche

1. Flüssigkristallanzeige mit erweitertem Betriebstemperaturbereich, umfassend

- zwei durch mindestens drei Trägerplatten (4, 8, 12) gebildete Zellen (1, 2), mit gleichartigen Anzeigemustern,
- eine erste nematische Flüssigkristallsubstanz (6) in der ersten Zelle (1) mit einem ersten Klärpunkt,
- eine zweite nematische Flüssigkristallsubstanz (10) in der zweiten Zelle (2) mit einem Klärpunkt, der tiefer liegt als der erste Klärpunkt,
- durchsichtige Frontelektrodenschichten (5, 9) in jeder Zelle (1, 2)
- Rückelektrodenschichten (7, 11) in jeder Zelle (1, 2), wobei zumindest die dem Betrachter zugewandte Rückelektrodenschicht (7) durchsichtig ist,
- einer Ansteuerschaltung (15) für beide Zellen (1, 2),

dadurch gekennzeichnet, dass

- beide nematische Flüssigkristallsubstanzen (6, 10) in ihrem nematischen Bereich eine verdrillte Struktur aufweisen,
- der nematische Bereich der ersten nematischen Flüssigkristallsubstanz (6) im wesentlichen dem Betriebstemperaturbereich der Flüssigkristallanzeige entspricht,
- der Schmelzpunkt der zweiten Flüssigkristallsubstanz (10) etwa unterhalb der unteren Grenze des Betriebstemperaturbereiches liegt,
- auf der vorderen (4) und auf der hinteren Trägerplatte (12) je ein Polarisator (3, 13) vorgesehen ist,

0100112
64/82

- ein Temperaturfühler (20) vorgesehen ist, der die Betriebstemperatur der Flüssigkristallanzeige erfasst, aufgrund derer die Ansteuerschaltung (15) die Zellen (1, 2) derart ansteuert, dass die Anzeige zwischen dem Klärpunkt der ersten Zelle (1) bis zu einer Temperatur unterhalb des Klärpunkts der zweiten Zelle (2) nur von der ersten Zelle (1), unterhalb dieser Temperatur nur von der zweiten Zelle (2) getragen wird.

2. Flüssigkristallanzeige nach Anspruch 1, dadurch gekennzeichnet, dass der Betriebstemperaturbereich von $100^{\circ}$C bis $-30^{\circ}$C, der nematische Bereich der ersten Flüssigkristallsubstanz (6) von etwa $100^{\circ}$C bis etwa $-20^{\circ}$C und der nematische Bereich der zweiten Flüssigkristallsubstanz von etwa $5^{\circ}$C bis unterhalb $-30^{\circ}$C reicht.

3. Flüssigkristallanzeige nach Anspruch 1 oder 2, dadurch gekennzeichnet, dass in der einen Zelle (1) entweder die Anzeigebereiche (a-g, i) und der anderen Zelle (2) deren Untergrund (h) oder vice versa angesteuert sind.

4. Flüssigkristallanzeige nach einem der Ansprüche 1 bis 3, dadurch gekennzeichnet, dass die gesamte Anzeigefläche der zweiten Zelle (2) mit Elektrodenschichten (9, 11) belegt ist, und dass der Betriebstemperaturbereich in drei Bereiche unterteilt ist, wobei:

- in einem ersten Temperaturbereich (A) die erste Zelle (1) an der Betriebsspannung liegt, die zweite Zelle (2) jedoch nicht;

- in einem zweiten Temperaturbereich (B) die erste Zelle (1) an der Betriebsspannung liegt, und an die ganze Front- (9) und Rückelektrodenschicht (11) der zweiten Zelle eine Betriebsspannung von mindestens dem Dreifachen der Freedericksz-Schwellenspannung der zweiten Flüssigkristallsubstanz (10) anliegt, wobei der Klärpunkt der zweiten Flüssigkristallsubstanz (10) in diesem Bereich liegt, und

- in einem dritten Temperaturbereich (C) die erste Zelle (1) nicht an der Betriebsspannung liegt, und die Elektrodenschichten (9, 11) der zweiten Zelle (2) so mit der Betriebsspannung beaufschlagt sind, dass die zweite Zelle (2) eine invertierte Anzeige bildet.

5. Flüssigkristallanzeige nach Anspruch 4, dadurch gekennzeichnet, dass

- der erste Temperaturbereich (A) von 85$^{\circ}$C bis 10$^{\circ}$C reicht,

- der zweite Temperaturbereich (B) von 10$^{\circ}$C bis 0$^{\circ}$C reicht, und

- der dritte Temperaturbereich (C) von 0$^{\circ}$C bis -30$^{\circ}$C reicht.

6. Flüssigkristallanzeige nach einem der Ansprüche 1 bis 5, dadurch gekennzeichnet, dass die Elektrodenschichten (5, 7; 9, 11) als Matrixelektroden, bestehend aus gegeneinander gekreuzten, zueinander parallelen Streifen ausgebildet sind, so dass die Anzeige ein Punktraster bildet, wobei die Matrixelektroden auf beiden Seiten der mittleren Trägerplatte (8) parallel angeordnet sind.

7. Flüssigkristallanzeige nach einem der Ansprüche 1 bis 5, dadurch gekennzeichnet, dass die Elektrodenschichten (5, 7; 9, 11) als Segment-Elektroden ausgebildet sind.

8. Flüssigkristallanzeige nach Anspruch 3, dadurch gekennzeichnet, dass die Elektrodenschichten (5, 7; 9, 11) aus Segment-Elektroden für die Anzeige von alphanumerischen Zeichen ausgebildet sind, wobei für die zweite Zelle (2) den Untergrund einer Ziffer-Anzeige bildende Elektroden und für jede Ziffer-Anzeige eine Elektrode für den Dezimalpunkt vorgesehen sind.

9. Flüssigkristallanzeige nach Anspruch 3, dadurch gekennzeichnet, dass die Anzeige einer Ziffer mit Dezimalpunkt in einer Zelle (2) aus neun Anzeigebereichen (a, b, c, d, e, f, g, h, i) besteht, die derart in Dreiergruppen miteinander verbunden sind, dass stets die Anzeige nur eines Anzeigebereiches (a, b, c, d, e, f, g, h, i) möglich ist.

10. Flüssigkristallanzeige nach einem der Ansprüche 1 bis 9, dadurch gekennzeichnet, dass auf der hinteren Trägerplatte (12) über dem hinteren Polarisator (13) ein metallischer, diffus reflektierender Reflektor (14) vorgesehen ist.

11. Flüssigkristallanzeige nach einem der Ansprüche 1 bis 10, dadurch gekennzeichnet, dass die Elektroden (7, 9) der mittleren Trägerplatte (8) spiegelsymmetrisch zueinander auf beiden Seiten der Trägerplatte (8) an-geordnet sind.

0100112

FIG.1

FIG.2

0100112

A1 A2

g'

A3 A4

a)

A1' A2' A3' A4'

11'

b)

a

c

b

d

h

e

f

g

i

c)

FIG.3

Europäisches
Patentamt

**EUROPÄISCHER RECHERCHENBERICHT**

0100112
Nummer der Anmeldung

EP 83 20 0978

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,A | US-A-3 873 186 (K. RICHIE) <br> * Anspruch 1; Figur 2 * | 1 | G 02 F 1/133 <br> G 02 F 1/137 |
| A | DE-A-3 110 382 (SHARP K.K.) <br> * Seiten 3,5,6; Figur 1 * | 1 | |
| A | FR-A-2 444 957 (BBC) <br> * Ansprüche 1,4; Figuren 1-3 * | 10 | |
| A | GB-A-2 008 304 (SHARP K.K.) <br> * Zusammenfassung; Anspruch 1 * | 1,6 | |
| A | US-A-3 967 881 (A. MORIYAMA et al.) <br> * Zusammenfassung; Figuren * | 1,3 | |
| A | 1982 SID INTERNATIONAL SYMPOSIUM, DIGEST OF TECHNICAL PAPAERS, Mai 1982, Seiten 176-177, Coral Gables, USA K. SAWADA et al.: "Double-layered guest-host display with wide operating temperature range" | | **RECHERCHIERTE SACHGEBIETE (Int. Cl. 3)** <br><br> G 02 F 1/133 <br> G 02 F 1/137 |

Der vorliegende Recherchenbericht wurde für alle Patentansprüche erstellt.

| Recherchenort <br> DEN HAAG | Abschlußdatum der Recherche <br> 28-10-1983 | Prüfer <br> BORMS F. |
|---|---|---|